# EUROPEAN PATENT APPLICATION

(11) **EP 0 694 898 A1**
(43) Date of publication of application: **31.01.1996**
(21) Application number: 95305264.4
(22) Date of filing: 28.07.1995
(51) Int. Cl.: G09F 21/04, F16B 47/00, G09F 7/18, G09F 7/12, B25G 1/00

(54) **A support device**

(30) Priority: 29.07.1994 GB 9415370
(71) Applicant: Bramall, Peter, Aylesbury, Buckinghamshire HP17 8SF (GB)
(72) Inventor: Bramall, Peter, Aylesbury, Buckinghamshire HP17 8SF (GB)
(74) Representative: Arthur, Bryan Edward

(57) **Abstract**

A support device for attachment to a surface by suction includes a body (1,2), a suction plate (3) having a moveable portion which is disposed within the periphery thereof and which is displaceable into the body (1,2), actuating means (4,5) connected to the moveable portion of the suction plate (3) and mounted within the body (1,2) for displacing the moveable portion of the suction plate (3), the body (1,2) including access means (20) permitting access to the actuating means (4,5) and a key (14) for engagement with the actuating means (4,5) for operation thereof.

## Description

The present invention relates to support devices and in particular to devices for supporting display signs, menu boards and headboards.

A common use of this kind of support device is to support advertising boards on the roof of a car at a retail showroom. Until recently advertising boards were supported on a car roof by four feet and hooks which attach to the car's gutters. In windy conditions, these advertising boards move causing scratching of the car. It is also very easy for the advertising board to be stolen.

Support devices have been proposed which are attached to a car roof or other smooth surface by suction. Such a device includes a round rubber suction plate which is placed against the smooth surface, a hollow cylindrical body which sits on top of the suction plate against the periphery of the suction plate, and an angularly displaceable rod extending through the body and supported at each end by the body. The central portion of the rod is cranked so that angular displacement of the rod causes the cranked portion to revolve with a vertical component. The cranked portion is linked to the suction plate so that as the rod is turned, the cranked portion causes the centre of the suction plate to be raised and lowered. If the centre of the suction plate is raised while the periphery of the suction plate is disposed on a smooth surface, a partial vacuum is created under the suction plate which holds the support device securely on the surface. The rod extends out of the body at one end and is bent away from the axis of rotation so that it can be used as a handle for raising and lowering the suction plate. Stops are located on the outside of the body so that the handle can only move between the fully raised and fully lowered position. It is necessary for the crank to pass slightly over-centre so that it can be locked in its fully raised position.

A disadvantage of the above device is that the support device may be easily removed by unauthorised persons and stolen. Furthermore, both ends of the rod extend through to the outside of the body and the stops are also external. This is not only unsightly, but is prone to collecting dirt and permitting entry of rainwater into the body.

A proposed development of the above device involves removing the handle, and drilling a hole through the exposed rod perpendicular to the axis of that rod. A separate key is used to turn the rod which is attached to the rod through the drilled hole. The drilled hole causes a significant weakness in the rod. Furthermore, the opposite end of the rod from the drilled hole extends out of the body and is bent through ninety degrees so as to engage with external stops which restrict the angular displacement of the rod. Rainwater is still able to enter the device, and it is still possible to release the device by levering the bent end of the rod away from one of the stops.

It is an object of the present invention to overcome or reduce at least some of the above disadvantages.

The present invention is a support device for attachment to a surface by suction including a body, a suction plate having a moveable portion which is disposed within the periphery thereof and which is displaceable into the body, actuating means connected to the moveable portion of the suction plate and mounted within the body for displacing the moveable portion of the suction plate, the body including access means permitting access to the actuating means and a key for enagement with the actuating means for operation thereof.

The key is preferably insertable through the access means for detachable engagement with actuating means.

In a preferred embodiment, the actuating means includes a rod mounted for angular displacement within the body and having a cranked portion, and at least one connecting link between the moveable portion of the suction plate and the cranked portion of the rod for displacing the moveable portion of the suction plate.

Preferably a first end of the rod is retained within the body. It is also preferred that the rod includes a second end which is retained within the body. To assist a user it is helpful if the key includes a lever arm. In one form of this invention, a cap is attachable to the first end of the rod and is engageable with the key.

It is an advantage that the rod includes an annular projection and the body includes a corresponding recess whereby the rod is retained within the body.

Preferably the rod includes at least one tab, and the body includes at least one abutment for restricting the angular displacement of the rod within a predetermined range. In a preferred embodiment, the support device includes a mounting device carried on the body of the device for holding an object. The mounting device may include a hole through which a frame support member passes for supporting a frame.

Embodiments of the present invention will be described by way of example only with reference to the accompanying drawings in which
Figure 1 shows a view of the present invention and
Figure 2 shows a side sectional view of the present invention.

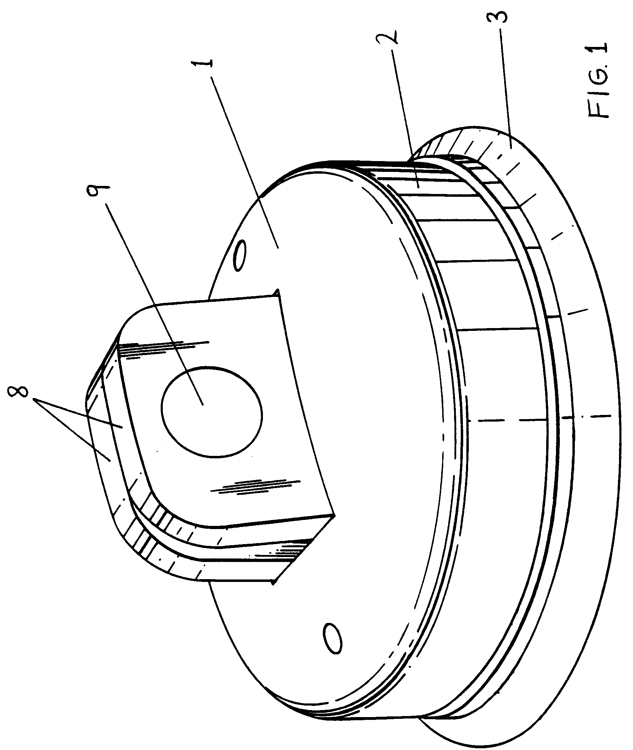

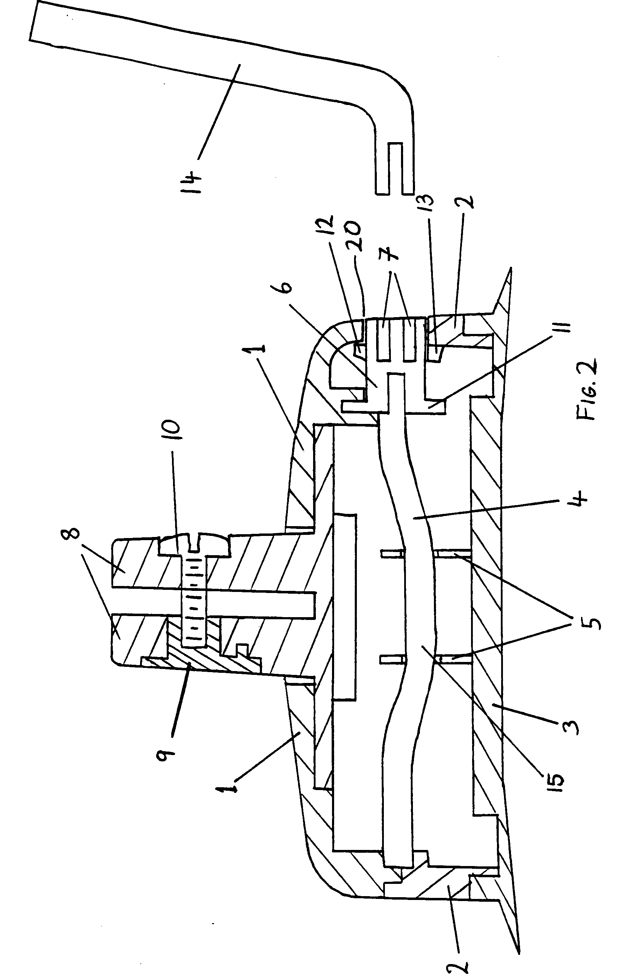

Referring to Figure 1, a body is formed in two parts 1 and 2, namely, a cylindrical base 2 and a top 1. Underneath the body 1,2 is a suction plate 3 which is capable of attachment to a surface such as a painted steel panel or glass. The body 1,2 supports a mounting device 8 which in this embodiment is in the form of a clamp with jaws moveable relative to each other by a screw (shown in Figure 2) which engages with a threaded insert 9. A card may be held by the clamp 8 for the purposes of display.

Referring to Figure 2 in which the numbering is consistent with Figure 1, the operation of the device will be described. The suction plate 3 is mounted on the underside of the cylindrical base 2 of the body 1,2 such that the periphery of the suction plate 3 rests against a lower rim of the cylindrical base 2. To achieve suction, the device is placed on a surface with the periphery of the suction plate 3 in contact with that surface. The central portion of the suction plate 3 may then be lifted away from the surface to form a partial vacuum between the suction plate 3 and the smooth surface. The periphery of the suction plate 3 forms an effective seal to prevent ambient air from getting under the suction plate 3. This partial vacuum will typically last for a few weeks or until the central portion of the suction plate 3 is allowed to return to its original position. A suitable suction plate 3 is one made of a plastics material.

A rod 4 is disposed within the body 1,2 and includes a cranked portion 15 which is used to raise and lower the central portion of the suction plate 3 through a pair of links 5. A first end of the rod 4 includes a cap 6 which rotates with the rest of the rod 4 since the rod 4 and the cap include abutting flat sides. The outer surface of the cap 6 is cylindrical, although it could be multi-facetted. The first end of the rod 4 includes an annular projection 11 which retains the rod 4 within the body 1,2. The rod 4 also includes one or more lugs 12 extending outwardly, and the body includes one or two abutments 13 which engage the lugs 12 to limit the angular displacement of the rod 4 between a low position where the cranked portion 15 is lowest and a high position where the cranked portion 15 is at its top-dead-centre position, or at a position just past top-dead-centre. This will reduce the likelihood of the device accidentally releasing. A second end of the rod 4 is rotatably supported between the cylindrical base 2 and the top 1. The cap 6 includes a series of axial openings into which a key 14 will fit. The key 14 includes a lever handle for assisting in turning the rod 4.

Figure 2 shows the device in its unattached form. In operation the device is placed onto a surface, the key 14 is inserted into the axial openings 7 of the cap 6, and the key 14 is then turned to rotate the rod 4 which causes the cranked portion 15 of the rod 4 to be raised. The so-rotated rod 4 then raises the central portion of the suction plate 3 via the links 5 to cause the device to adhere to the surface. Rotation of the rod 4 will stop when the lugs 12 engage with the abutments 13. The key 14 may then be removed from the axial openings 7 and kept for later use. The first end of the rod 4 stays within the body 1,2 at all times. The body 1,2 includes an access port 20 into which the key 14 may be inserted. The key 14 engages with the cap 6 so that the rod 4 may be turned. The cap 6 blocks the access port 20 which reduces water penetration and the possibility of tampering by unauthorised people. The second end of the rod 4 is maintained entirely within the body 1,2.

The body 1,2 supports the claim 8. Objects may be clamped between the jaws of the clamp 8. A screw 10 and threaded insert 9 are used to clamp such an object.

The support device is of particular use in the motor industry where advertising head-boards are supported on the roof of a car. The suction plate 3 is attached to the car, and a head-board is held by one or preferably two support devices.

The body 1,2 of the device is typically constructed of a plastics material, and the rod 4 from metal or plastics.

The key 14 and the axial openings 7 may be shaped in all manner of ways so that only the correct shaped key 4 will operate the device. This gives added security and reduces the likelihood of theft. Different users have different keys 14.

According to another embodiment (not shown), the key 14 is not detachable, but is attached to the device. The key 14 may be formed integrally with the rod 4.

Other uses of the device are also envisaged. The device may be used to attach a roof-rack to the roof of a car. Alternatively, the clamp 8 can be replaced with a handle, and the device used to pick up sheet materials such as glass.

## Claims

1. A support device for attachment to a surface by suction including a body (1,2), a suction plate (3) having a moveable portion which is disposed within the periphery thereof and which is displaceable into the body (1,2) actuating means (4,5) connected to the moveable portion of the suction plate (3) and mounted within the body (1,2) for displacing the moveable portion of the suction plate (3), the body (1,2) including access means permitting access to the actuating means (4,5) and a key (14) for engagement with the actuating means (4,5) for operation thereof.

2. A support device according to claim 1 wherein the key (14) is insertable through the access means for detachable engagement with the actuating means (4,5).

3. A support device according to claim 1 or 2 wherein the actuating means includes a rod (4) mounted for angular displacement and having a cranked portion (15).

4. A support device according to claim 3 wherein the actuating means includes at least one connecting link (5) between the moveable portion of the suction plate (3) and the cranked portion (15) of the rod (4) for displacing the moveable portion of the suction plate (3).

5. A device according to claim 3 or 4 wherein a first end of the rod (4) is retained within the body (1,2).

6. A device according to claims 3 to 5 wherein the rod (4) includes a second end which is retained within the body (1,2).

7. A device according to any of claims 5 and 6 wherein a cap (6) is attachable to the first end of the rod (4) and is engageable with the key (14).

8. A device according to any of claims 3 to 7 wherein the rod (4) includes an annular projection (11) and the body (1,2) includes a corresponding recess whereby the rod (4) is retained within the body (1,2).

9. A device according to any of claims 3 to 8 wherein the rod (4) includes at least one tab (12), and the body (1,2) includes at least one abutment (13) for restricting the angular displacement of the rod (4) within a range.

10. A device according to any of claims 5 to 9 wherein the first end of the rod (4) includes an axial opening (7) which is engageable with the key (14).
